(19) Europäisches Patentamt / European Patent Office / Office européen des brevets

(11) **EP 4 067 310 A1**

(12) **EUROPEAN PATENT APPLICATION**
published in accordance with Art. 153(4) EPC

(43) Date of publication:
**05.10.2022 Bulletin 2022/40**

(21) Application number: **20892342.5**

(22) Date of filing: **17.09.2020**

(51) International Patent Classification (IPC):
*C01G 53/00* (2006.01)    *H01M 4/505* (2010.01)
*H01M 4/525* (2010.01)

(52) Cooperative Patent Classification (CPC):
**C01G 53/00; H01M 4/505; H01M 4/525;**
Y02E 60/10

(86) International application number:
**PCT/JP2020/035249**

(87) International publication number:
**WO 2021/106324 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.11.2019 JP 2019216951**

(71) Applicant: **Panasonic Intellectual Property Management Co., Ltd.**
**Osaka-shi, Osaka 540-6207 (JP)**

(72) Inventors:
• **AOKI, Yoshinori**
  **Osaka-shi, Osaka 540-6207 (JP)**
• **TOGO, Masakazu**
  **Osaka-shi, Osaka 540-6207 (JP)**
• **OGASAWARA, Takeshi**
  **Osaka-shi, Osaka 540-6207 (JP)**

(74) Representative: **Novagraaf International SA**
**Chemin de l'Echo 3**
**1213 Onex, Geneva (CH)**

(54) **POSITIVE-ELECTRODE ACTIVE MATERIAL FOR NONAQUEOUS-ELECTROLYTE SECONDARY BATTERY, METHOD FOR PRODUCING POSITIVE-ELECTRODE ACTIVE MATERIAL FOR NONAQUEOUS-ELECTROLYTE SECONDARY BATTERY, AND NONAQUEOUS-ELECTROLYTE SECONDARY BATTERY**

(57) A positive-electrode active material for nonaqueous-electrolyte secondary batteries which comprises a given lithium-transition metal composite oxide having a lamellar structure and a compound A containing Ca and/or Sr, the compound A being present on the surface of or at the boundaries of primary particles of the lithium-transition metal composite oxide. The lamellar structure includes an Li layer where Li reversibly goes in and out, and the proportion of non-lithium metallic element(s) present in the Li layer is 0.7-3.0 mol% with respect to the total amount of the non-lithium metallic elements contained in the lithium-transition metal composite oxide. In analysis by X-ray diffraction, the positive-electrode active material gives an X-ray diffraction pattern in which the ratio of the half-band width m of a diffraction peak for the (003) plane to the half-band width n of a diffraction peak for the (104) plane, m/n, is $0.75 \leq m/n \leq 1.0$.

EP 4 067 310 A1

# Figure 1

**Description**

TECHNICAL FIELD

The present disclosure relates to a positive electrode active material for non-aqueous electrolyte secondary batteries, a method for producing the positive electrode active material for non-aqueous electrolyte secondary batteries, and a non-aqueous electrolyte secondary battery.

BACKGROUND ART

In recent years, lithium transition metal composite oxides with high Ni content have attracted attention as positive electrode active materials having a high energy density. Patent Literature 1 discloses, for example, a positive electrode active material for non-aqueous electrolyte secondary batteries that is composed of a lithium transition metal composite oxide represented by the formula: $Li_xNi_yCo_zM_mO_2$ where M is an element selected from Ba, Sr, and B, and $0.9 \leq x \leq 1.1$, $0.5 \leq y \leq 0.95$, $0.05 \leq z \leq 0.5$, and $0.0005 \leq m \leq 0.02$, and has a BET specific surface area of $0.8 \ m^2/g$ or smaller.

Moreover, Patent Literature 2 discloses a positive electrode active material for non-aqueous electrolyte secondary batteries, having an $\alpha$-NaFeO$_2$ structure and including one or two more selected from the group consisting of Mn, Ni, and Co as transition metal elements, wherein an alkaline earth metal and W are present on a particle surface of the lithium transition metal composite oxide.

CITATION LIST

PATENT LITERATURE

PATENT LITERATURE 1: Japanese Unexamined Patent Application Publication No. 2003-100295

PATENT LITERATURE 2: Japanese Unexamined Patent Application Publication No. 2018-129221

SUMMARY

When using a lithium transition metal composite oxide with high Ni content for a positive electrode active material for non-aqueous electrolyte secondary batteries, a larger amount of Li is extracted upon charge, therefore causing a problem of deformation of the layered crystal structure when carrying out repeated charge/discharge, and reducing a capacity. The technologies disclosed in Patent Literatures 1 and 2 still have room for improvement in charge/discharge cycle characteristics.

The positive electrode active material for non-aqueous electrolyte secondary batteries in an aspect of the present disclosure includes the positive electrode active material comprises a lithium transition metal composite oxide having a layered structure, represented by a formula $Li_aNi_xMn_yM_zO_{2-b}$ wherein $0.95 < a < 1.05$, $0.7 \leq x \leq 0.95$, $0 < y \leq 0.3$, $0 \leq z \leq 0.3$, $0 \leq b < 0.05$, $x + y + z = 1$, and M is at least one element selected from the group consisting of Al, Co, Fe, Ti, Si, Nb, Mo, W, and Zn and a compound A including at least one of Ca and Sr present on a surface or at a boundary of primary particles of the lithium transition metal composite oxide. It is characterized in that the layered structure includes a Li layer in which Li reversibly moves in and out, a proportion of metal elements excluding Li present in the Li layer is 0.7 mol% or more and 3.0 mol% or less relative to a total molar amount of the metal elements excluding Li in the lithium transition metal composite oxide, and a m/n ratio of a half width m of a diffraction peak in a (003) plane to a half width n of a diffraction peak in a (104) plane is $0.75 \leq m/n \leq 1.0$ in an X-ray diffraction pattern by X-ray diffraction.

The method for producing the positive electrode active material for non-aqueous electrolyte secondary batteries in an aspect of the present disclosure is characterized in that the method includes a step of calcinating a mixture obtained by dry-mixing a transition metal oxide, a Li compound and at least one of a Ca compound and a Sr compound at 850°C or lower.

The non-aqueous electrolyte secondary battery which is an aspect of the present disclosure is characterized in that the non-aqueous electrolyte secondary battery comprises a positive electrode including the positive electrode active material for non-aqueous electrolyte secondary batteries described above, a negative electrode, and a non-aqueous electrolyte.

According to the positive electrode active material for non-aqueous electrolyte secondary batteries, which is an aspect of the present disclosure, a non-aqueous electrolyte secondary battery of high capacity may be provided that inhibits lowering of a battery capacity accompanying charge/discharge. The positive electrode active material for non-aqueous electrolyte secondary batteries includes a lithium transition metal composite oxide with high Ni content, and contributes to improvement on charge/discharge cycle characteristics of the battery.

BRIEF DESCRIPTION OF DRAWING

FIG. 1 is a cross sectional view of the non-aqueous electrolyte secondary battery according to an example of an embodiment.
FIG. 2 is X-ray diffractograms of SrO and Cao and those of Examples 2 and 3.

DESCRIPTION OF EMBODIMENTS

In the layered structure of the lithium transition metal composite oxide included in the positive electrode active material, a transition metal layer containing Ni and the like, a Li layer, and an oxygen layer are present, and Li ions present in the Li layer reversibly move in and out, allowing a charge/discharge reaction of the battery to proceed. Using the lithium transition metal composite oxide with high Ni content may result in collapsing the layered structure and reducing a battery capacity because a large amount of Li ions are extracted out of the Li layer in charging the battery. Moreover, the lithium transition metal composite oxide with high Ni content is highly active near the particle surface, and thus prone to structural instability, which facilitates formation of a surface deteriorated layer and erosion thereof due to a reaction with an electrolytic solution or the like, thereby resulting in lowering of battery capacity.

Therefore, the present inventors have found, as a result of diligent investigation for solving the above problem, that first, including a predetermined amount of metal elements excluding Li in the Li layer while including a predetermined amount of Mn in the transition metal layer, which Mn does not change in oxidation number during charge/discharge, and further forming a layered structure with moderate strains in the directions of the following planes, such that in an X-ray diffraction pattern, a ratio, a half width m of a diffraction peak in a (003) plane /a half width n of a diffraction peak in a (104) plane, is within a predetermined range, enables a high battery capacity while maintaining the structure of the lithium transition metal composite oxide. Furthermore, the present inventors have found that protecting the surface of the lithium transition metal composite oxide with a compound including at least one of Ca and Sr, can inhibit an erosion of a structurally deteriorated layer. A sufficient effect on the lithium transition metal composite oxide with high Ni content cannot be obtained by either strengthening the skeletal structure of the layered structure or protecting the surface, however, the synergistic effect of applying both can specifically improve the charge/discharge cycle characteristics.

An example of the embodiment of the non-aqueous electrolyte secondary battery according to the present disclosure will be described in detail below. In the following, a cylindrical battery in which a wound electrode assembly is housed in a cylindrical battery case is illustrated, however, the electrode assembly is not limited to the wound type, and a plurality of positive electrodes and a plurality of negative electrodes may be alternately stacked one by one with separators interposed therebetween. Further, the battery case is not limited to a cylindrical shape, and may be, for example, a square shape, or a coin shape, or may be a battery case formed of a laminated sheet including a metal layer and a resin layer.

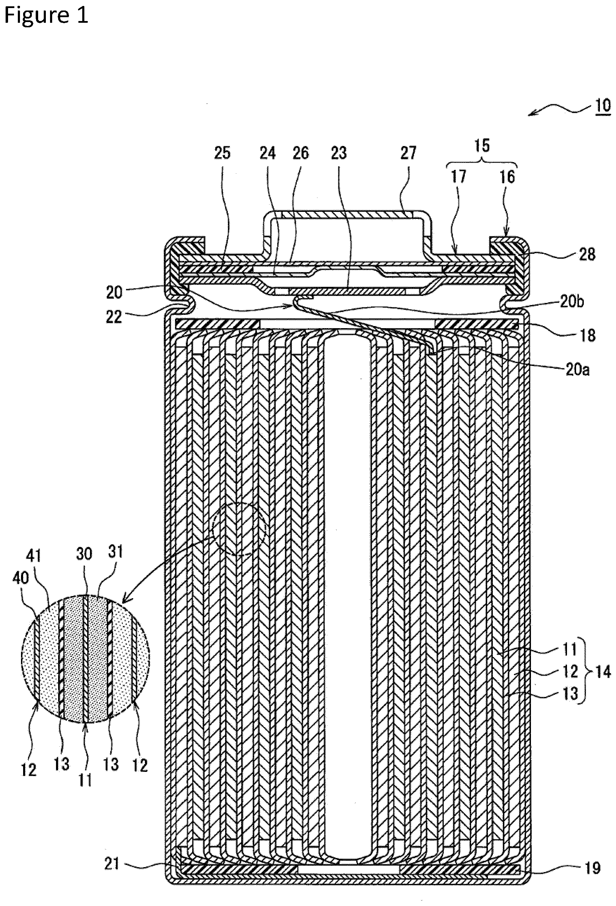

FIG. 1 is a sectional view of a non-aqueous electrolyte secondary battery 10 according to an example of an embodiment. As illustrated in FIG. 1, non-aqueous electrolyte secondary battery 10 comprises an electrode assembly 14, a non-aqueous electrolyte (not shown), and a battery case 15 that houses electrode assembly 14 and the non-aqueous electrolyte. Electrode assembly 14 has a wound structure in which a positive electrode 11 and a negative electrode 12 are wound via a separator 13. Battery case 15 is composed of a bottomed cylindrical outer can 16 and a sealing assembly 17 that clogs up the opening of an outer can 16.

Electrode assembly 14 is composed of long positive electrode 11, long negative electrode 12, two long separators 13, a positive electrode tab 20 joined to positive electrode 11, and a negative electrode tab 21 joined to negative electrode 12. Negative electrode 12 is formed to have a size one size larger than that of positive electrode 11 in order to prevent lithium from precipitation. Namely, negative electrode 12 is formed longer than positive electrode 11 in the longitudinal direction and the width direction (short direction). Two separators 13 are formed to have sizes at least one size larger than a size of positive electrode 11, and are arranged to sandwich positive electrode 11, for example.

Non-aqueous electrolyte secondary battery 10 comprises insulating plates 18 and 19 arranged above and below electrode assembly 14, respectively. In the example shown in FIG. 1, positive electrode tab 20 attached to positive electrode 11 extends to the sealing assembly 17 side through the throughhole of insulating plate 18, and negative electrode tab 21 attached to negative electrode 12 passes through the outside of insulating plate 19 and extends to the bottom side of outer can 16. Positive electrode tab 20 is connected to the lower surface of a bottom plate 23 of sealing assembly 17 by welding or the like, and a cap 27 of sealing assembly 17 electrically connected to bottom plate 23 serves as a positive electrode terminal. Negative electrode tab 21 is connected to the inner surface of the bottom of outer can 16 by welding or the like, and outer can 16 serves as a negative electrode terminal.

Outer can 16 is, for example, a bottomed cylindrical metal container. A gasket 28 is arranged between outer can 16 and sealing assembly 17, and seals the internal space of battery case 15. Outer can 16 has a grooved portion 22 that supports sealing assembly 17, which is formed by pressing, for example, the side surface portion from the outside. Grooved portion 22 is preferably formed in an annular shape along the circumferential direction of outer can 16, and supports sealing assembly 17 on the upper surface of the grooved portion.

Sealing assembly 17 has a structure in which bottom plate 23, a lower vent member 24, an insulating member 25, an upper vent member 26, and cap 27 are stacked in this order from the electrode assembly 14 side. Each member constituting sealing assembly 17 has, for example, a disk shape or a ring shape, and each member except insulating member 25 is electrically connected to each other. Lower vent member 24 and upper vent member 26 are connected to each other at the central portion thereof, and insulating member 25 is interposed between the peripheral portions of each member. When the internal pressure of the battery rises due to abnormal heat generation, lower vent member 24 is deformed and broken so as to push upper vent member 26 toward the cap 27 side, and the current path between lower vent member 24 and upper vent member 26 is cut off. When the internal pressure further rises, upper vent member 26 is broken and a gas is discharged from the opening of cap 27.

Hereinafter, positive electrode 11, negative electrode 12, separator 13, and the non-aqueous electrolyte, constituting non-aqueous electrolyte secondary battery 10, will be described in detail, and in particular, the positive electrode active material included in a positive electrode mixture layer 31 forming positive electrode 11 will be described in detail.

[Positive Electrode]

A positive electrode 11 has a positive electrode current collector 30 and a positive electrode mixture layer 31 formed on both sides of positive electrode current collector 30. As positive electrode current collector 30, a foil of a metal such as aluminum or an aluminum alloy that is stable in the potential range of positive electrode 11 or a film or the like in which the metal is arranged on the surface layer, can be used. Positive electrode mixture layer 31 includes the positive electrode active material, a conductive agent, and a binder. The thickness of positive electrode mixture layer 31 is, for example, 10 $\mu$m to 150 $\mu$m on one side of positive electrode current collector 30. Positive electrode 11 can be fabricated by coating a surface of positive electrode current collector 30 with a positive electrode slurry including the positive electrode active material, the conductive agent, the binder, etc., drying the coating film, and then compressing it to form positive electrode mixture layer 31 on both sides of positive electrode current collector 30.

The conductive agent included in positive electrode mixture layer 31 that is carbon materials, such as carbon black, acetylene black, Ketjen black, and graphite, can be exemplified. As the binder included in positive electrode mixture layer 31, fluororesins such as polytetrafluoroethylene (PTFE) and polyvinylidene difluoride (PVdF), polyacrylonitrile (PAN), polyimides, acrylic resins, polyolefins, etc., can be exemplified. These resins may be combined for use with carboxymethyl cellulose (CMC) or a salt thereof, polyethylene oxide (PEO), or the like.

The positive electrode active material included in positive electrode mixture layer 31 includes a lithium transition metal composite oxide having a layered structure, and a compound A including at least one of Ca and Sr present on a surface of a primary particle of the lithium transition metal composite oxide including a surface of a secondary particle thereof, or at a boundary of primary particles.

Examples of the layered structure of the lithium transition metal composite oxide include a layered structure belonging to a space group R-3m and a layered structure belonging to a space group C2/m. Among them, the layered structure belonging to a space group R-3m is preferred in terms of increasing capacity, stability of crystal structure, etc. The layered structure of lithium transition metal composite oxides includes a transition metal layer, a Li layer, and an oxygen layer.

The lithium transition metal composite oxide can be represented by the formula $Li_aNi_xMn_yM_zO_{2-b}$ wherein in the formula, $0.95 < a < 1.05$, $0.7 \leq x \leq 0.95$, $0 < y \leq 0.3$, $0 \leq z \leq 0.3$, $0 \leq b < 0.05$, $x + y + z = 1$, and M is at least one element selected from the group consisting of Al, Co, Fe, Ti, Si, Nb, Mo, W, and Zn. The positive electrode active material may include a lithium transition metal composite oxide other than that represented by the above formula, or another compound, as long as the object of the present disclosure is not impaired. A molar fraction of the metal elements included in the lithium transition metal composite oxide can be measured by an inductively coupled plasma atomic emission spectroscopic apparatus (ICP-AES), electron beam microanalyzer (EPMA), energy dispersive X-ray analyzing apparatus (EDX), etc.

A subscript a denoting a proportion of Li in the lithium transition metal composite oxide preferably satisfies $0.95 \leq a < 1.05$ and preferably $0.97 \leq a \leq 1.03$. When a is less than 0.95, the battery capacity may be decreased as compared with the case where a satisfies the above range. The value a being 1.05 or more may lead to lowering of the charge/discharge cycle characteristics compared to the case where a satisfies the above range.

A subscript x denoting a proportion of Ni to the total number of moles of the metal elements excluding Li in the lithium transition metal composite oxide, satisfies $0.7 \leq x \leq 0.95$ and preferably $0.8 \leq x \leq 0.95$. When x is 0.7 or more, a battery of high capacity can be obtained. Moreover, x being 0.8 or more facilitates an improvement effect on cycle characteristics due to the structural stabilization of the lithium transition metal composite oxide to be obtained. Further, when x is greater than 0.95, a sufficient amount of Mn and M cannot be included, thereby, resulting in instability of the layered structure of the lithium transition metal composite oxide.

A subscript y denoting a content of Mn to the total number of moles of the metal elements excluding Li in the lithium transition metal composite oxide, preferably satisfies $0 < y \leq 0.3$ and more preferably $0.01 \leq y \leq 0.15$. Since Mn does not change in the oxidation number even during charge/discharge, inclusion of Mn in the transition metal layer is presumed to stabilize the structure of the transition metal layer. When y is greater than 0.3, on the other hand, the content of Ni becomes less, and the battery capacity reduces. For example, Mn may be uniformly dispersed, for example, in the layered structure of the lithium transition metal composite oxide, or else may be present in a portion of the layered structure.

M (M is at least one element selected from the group consisting of Al, Co, Fe, Ti, Si, Nb, Mo, W, and Zn) is optional components. The subscript z denoting a content of M to the total number of moles of the metal elements excluding Li in the lithium transition metal composite oxide, preferably satisfies $0 \leq z \leq 0.3$.

The lithium transition metal composite oxide is a particle having a volume-based median diameter (D50) of, for example, 3 $\mu$m to 30 $\mu$m, preferably 5 $\mu$m to 25 $\mu$m, and particularly preferably 7 $\mu$m to 15 $\mu$m. D50 refers to a particle size in which a cumulative frequency is 50% from the smallest particle size in a volume-based particle size distribution and is also called a median diameter. The particle size distribution of the lithium transition metal composite oxide can be measured by using a laser diffraction type particle size distribution measuring apparatus (for example, MT3000II manufactured by MicrotracBEL Corp.) and water as a dispersion medium.

The lithium transition metal composite oxide is, for example, a secondary particle formed by aggregating a plurality of primary particles. The particle size of the primary particle constituting the secondary particle is, for example, 0.05 $\mu$m to 1 $\mu$m. The particle size of the primary particle is measured as a diameter of a circumscribed circle in the particle image observed by a scanning electron microscope (SEM).

Compound A is present on a surface or at a boundary of primary particles of the lithium transition metal composite oxide. This can inhibit formation and erosion of the structurally deteriorated layer on the surface of lithium transition metal composite oxide due to the reaction with an electrolytic solution or the like. Here, a surface of secondary particle is included in the surface of primary particle. Moreover, the boundary of primary particles is an interface between primary particles. Compound A present on the surface or at the boundary of the primary particles means that it is in contact with the surface or boundary of the primary particles, or in a state of being within the range of 10 nm or less from the surface or boundary of the primary particles. For example, compound A may be uniformly dispersed over the entire surface or boundary of the lithium transition metal composite oxide, or may be present in a portion thereof.

Compound A includes at least one of Ca and Sr. Compound A may include a Ca compound or a Sr compound. Ca compounds that, are for example, $CaO$, $Ca(OH)_2$, and $CaCO_3$ can be exemplified. Sr compounds that are, for example, $SrO$, $Sr(OH)_2$, and $SrCO_3$ can be exemplified.

A total amount of Ca and Sr in compound A may be 1 mol% or less relative to the total molar amount of the metal elements excluding Li in the lithium transition metal composite oxide. This can further improve the charge/discharge cycle characteristics.

The layered structure of the lithium transition metal composite oxide includes a Li layer in which Li reversibly moves in and out, and a proportion of the metal elements excluding Li present in the Li layer is 0.7 mol% or more and 3.0 mol% or less relative to a total molar amount of the metal elements excluding Li in the lithium transition metal composite oxide. The proportion of the metal elements excluding Li in the Li layer being less than 0.7 mol%, destabilizes the layered structure in the state of Li ions extracted and collapses the structure, resulting in lowering of a battery capacity. Moreover, the proportion of the metal elements excluding Li in the Li layer exceeding 3.0 mol%, lowers diffusivity of Li ions in the Li layer and increases the reaction resistance of a battery together with lowering of a battery capacity. The metal elements present in the Li layer are mainly composed of Ni, and may include other metal elements.

The proportion of metal elements excluding Li in the Li layer is determined from Rietveld analysis results on an X-ray diffraction pattern obtained by X-ray diffraction measurement of the positive electrode active material. A Rietveld analysis software PDXL2 (Rigaku Corporation) can be used for Rietveld analysis on X-ray diffraction pattern.

The X-ray diffraction pattern is obtained from a powder X-ray diffraction apparatus (product name "RINT-TTR", source: Cu-K$\alpha$, manufactured by Rigaku Corporation), according to a powder X-ray diffraction method under the following conditions.

Measurement range: 15 to 120°
Scanning speed: 4°/min
Analysis range: 30 to 120°
Background: B-spline
Profile function: Split pseudo-Voigt function
Binding condition: Li(3a) + Ni(3a) = 1

Ni(3a) + Ni(3b) = α (α is a proportion of respective Ni contents)
ICSD No.: 98-009-4814

The positive electrode active material preferably has a crystallite size s of 400 Å $\leq$s $\leq$800 Å, which is calculated from a half width n of a diffraction peak in a (104) plane in an X-ray diffraction pattern by the aforementioned X-ray diffraction, according to a Scherrer's formula (Scherrer equation). The aforementioned crystallite size s of the lithium transition metal composite oxide smaller than 400 Å may lower crystallinity, leading to lowering of a battery capacity. Moreover, the above crystallite size s of the lithium transition metal composite oxide exceeding 800 Å may lower the diffusivity of Li and result in poor output characteristics of a battery. The Scherrer's formula is expressed by the following equation.

$$s = K\lambda/B\cos\theta$$

wherein in the above formula, s is a crystallite size, $\lambda$ is a wavelength of X-ray, B is a half width of a diffraction peak in (104) plane, $\theta$ is a diffraction angle (rad), and K is a Scherrer constant. In the present embodiment, K is set to 0.9.

The positive electrode active material has a m/n ratio of a half width m of a diffraction peak in (003) plane to a half width n of a diffraction peak in (104) plane of 0.75 $\leq$m/n $\leq$1.0 in an X-ray diffraction pattern by the aforementioned X-ray diffraction. The m/n ratio within this range allows the layered structure to be in a state of having moderate strains in the directions of the planes, enabling a battery of high capacity with an improved charge/discharge cycle characteristics to be obtained. The m/n less than 0.75 results in a brittle layered structure due to an excessively large strain of the layered structure. The m/n exceeding 1.0 reduces the battery capacity.

In the X-ray diffraction pattern of the positive electrode active material by the aforementioned X-ray diffraction measurement, no peaks derived from CaO and SrO are preferably present. The CaO and SrO included to the extent that they are detected in the X-ray diffraction measurement may cause reduction in the battery capacity, etc.

Next, an example of the method for producing the positive electrode active material including the lithium transition metal composite oxide and compound A, will be described.

The method for producing the positive electrode active material comprises, for example, a first step of obtaining a transition metal oxide including Ni, Mn, and arbitrary metal elements, a second step of mixing the transition metal oxide obtained in the first step with a Li compound to obtain a mixture, and a third step of calcining the mixture.

In the first step, for example, while stirring a solution of metal salts including Ni, Mn, and arbitrary metal elements (Co, Al, Nb or the like), an alkaline solution such as sodium hydroxide is added dropwise, and the pH is adjusted to the alkaline side (for example, 8.5 to 12.5), to precipitate (co-precipitate) a transition metal hydroxide including Ni, Mn, and the arbitrary metal elements, and then the transition metal hydroxide is calcinated to obtain a transition metal oxide including Ni, Mn, and the arbitrary metal elements. The calcination temperature is not particularly limited, but is, for example, in the range of 300°C to 600°C.

In the second step, the transition metal oxide obtained in the first step is dry-mixed with a Li compound and at least one of a Ca compound and a Sr compound to obtain a mixture. Examples of the Li compound include $Li_2CO_3$, LiOH, $Li_2O_2$, $LiNO_3$, $LiNO_2$, $Li_2SO_4$, LiOH●$H_2O$, LiH, and LiF. Examples of the Ca compound include $Ca(OH)_2$, CaO, $CaCO_3$, $CaSO_4$, and $Ca(NO_3)_2$. Examples of the Sr compounds include $Sr(OH)_2$, $Sr(OH)_2$●$8H_2O$, SrO, $SrCO_3$, and $SrSO_4$, and $Sr(NO_3)_2$. A mixing proportion of the transition metal oxide obtained in the first step to the Li compound is, preferably, for example, a proportion such that a molar ratio of metal elements excluding Li to Li is in the range of 1 :0.98 to 1 :1.1, in terms of facilitating adjustment of the above parameters to the above specified range. Moreover, a mixing proportion of the transition metal oxide obtained in the first step to the Ca compound or the Sr compound is, preferably, for example, a proportion such that a molar ratio of the metal elements excluding Li to Ca and Sr is in the range of 1 :0.0003 to 1 :0.03, in terms of facilitating adjustment of the above parameters to the above specified range. In the second step, when mixing the transition metal oxide obtained in the first step with the Li compound and the Ca compound or the Sr compound, some other metal raw materials may be added if necessary. The other metal raw materials are oxides or the like including metal elements other than the metal elements constituting the transition metal oxide obtained in the first step.

In the third step, the mixture obtained in the second step is calcinated at 850°C or lower at a predetermined time to obtain the positive electrode active material according to the present embodiment. When calcinating at temperatures exceeding 850°C, compound A including at least one of Ca and Sr may partially aggregate in a specified area and the satisfactory effect may not be obtained. The calcination of the mixture in the third step comprises a multi-step calcination step including, for example, a first calcination step of calcinating in a calcination furnace at a first rate of temperature rise up to a first set temperature of 450°C to 680°C under an oxygen stream, and a second calcination step of calcinating the calcinated product obtained in the first calcination step in a calcination furnace at a second rate of temperature rise up to a second set temperature of higher than 680°C and 850°C or lower under an oxygen stream. Here, the first rate of temperature rise is in the range of 1.5°C/min to 5.5°C/min, and the second rate of temperature rise that is slower than the first rate of temperature rise is in the range of 0.1°C/min to 3.5°C/min. A plurality of the first rates of temperature rise and the second rates of temperature rise may be set for each temperature region provided that they are within the aforementioned specified ranges, respectively. The holding time of the first set temperature in the first calcination step is preferably 5 hours or shorter, and more preferably 3 hours or shorter in terms of adjusting each of the above parameters of the lithium transition metal composite oxide to the aforementioned specified ranges. The holding time of the first set temperature is the time for maintaining the first set temperature after reaching the first set temperature. The holding time of the second set temperature in the second calcination step is preferably 1 hour to 10 hours and more preferably 1 hour to 5 hours, in terms of adjusting each of the above parameters of the lithium transition metal composite oxide to the aforementioned specified ranges. The holding time of the second set temperature is the time for maintaining the second set temperature after reaching the second set temperature. When calcinating the mixture, in order to adjust each of the above parameters to the aforementioned specified ranges, for example, calcination can be carried out in an oxygen stream having an oxygen concentration of 60% or more and a flow rate of the oxygen stream being set to in the range of 0.2 mL/min to 4 mL/min per 10 cm$^3$ of the calcination furnace and 0.3 L/min or more per kg of the mixture.

Molar fractions of the metal elements included in the positive electrode active material obtained above were measured by inductively coupled plasma (ICP) emission spectroscopy and the positive electrode active material can be represented by the formula $Li_aNi_xMn_yM_zCa_\alpha Sr_\beta O_{2-b}$ where $0.95 < a < 1.05$, $0.7 \leq x \leq 0.95$, $0 < y \leq 0.3$, $0 \leq z \leq 0.3$, $\alpha + \beta > 0$, $0 \leq b < 0.05$, $x + y + z = 1$, and M is at least one element selected from the group consisting of Al, Co, Fe, Ti, Si, Nb, Mo, W, and Zn. Ca and Sr are included in compound A present on the surface of the lithium transition metal composite oxide.

[Negative Electrode]

Negative electrode 12 has a negative electrode current collector 40 and negative electrode mixture layers 41 formed on both sides of negative electrode current collector 40. As negative electrode current collector 40, a foil of a metal such as copper or a copper alloy that is stable in the potential range of negative electrode 12, or a film or the like in which the metal is arranged on the surface layer, can be used. Negative electrode mixture layer 41 includes a negative electrode active material and a binder. The thickness of negative electrode mixture layer 41 is, for example, 10 μm to 150 μm on one side of negative electrode current collector 40. Negative electrode 12 can be fabricated by coating a surface of negative electrode current collector 40 with a negative electrode mixture slurry including the negative electrode active material, the binder, etc., drying the coating film, and then rolling it to form negative electrode mixture layers 41 on both sides of negative electrode current collector 40.

The negative electrode active material included in negative electrode mixture layer 41 is not particularly limited provided that it can reversibly intercalate and de-intercalate lithium ions, and a carbon material such as graphite is generally used. The graphite may be any of natural graphite such as scaly graphite, massive graphite and earthy graphite, and artificial graphite such as massive artificial graphite and graphitized mesophase carbon microbeads. Moreover, the negative electrode active material that is a metal such as Si or Sn that alloys with Li, a metal compound including Si, Sn or the like, a lithium titanium composite oxide, or the like may be used. Further, such a material coated with a carbon film may be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0 < y < 2$), or the like can be combined with graphite.

As the binder included in negative electrode mixture layer 41, a fluororesin such as PTFE or PVdF, a PAN, a polyimide, an acrylic resin, a polyolefin, or the like may be used as in the case of positive electrode 11, but styrene-butadiene rubber (SBR) is preferably used. Moreover, negative electrode mixture layer 41 may include CMC or a salt thereof, polyacrylic acid (PAA) or a salt thereof, polyvinyl alcohol (PVA), etc.

[Separator]

Separator 13 that is, for example, a porous sheet having ion permeability and insulating property, is used. Specific examples of the porous sheet include a microporous thin membrane, a woven fabric, and a non-woven fabric. As a material of separator 13, a polyolefin such as polyethylene or polypropylene, cellulose, or the like is suitable. Separator 13 may have a single-layer structure or a multilayer structure. Further, a resin layer having high heat resistance, such as an aramid resin, and a filler layer including a filler of an inorganic compound, may be disposed on a surface of separator 13.

[Non-aqueous Electrolyte]

The non-aqueous electrolyte includes, for example, a non-aqueous solvent and an electrolyte salt dissolved in the non-aqueous solvent. As the non-aqueous solvent, for example, an ester, an ether, a nitrile such as acetonitrile, an amide such as dimethylformamide, or a mixed solvent of two or more of them can be used. The non-aqueous solvent may include a halogen-substituted derivative in which at least a portion of hydrogen in the solvent is substituted with a halogen atom such as fluorine. Examples of the halogen-substituted derivative include fluorinated cyclic carbonates such as fluoroethylene carbonate (FEC), fluorinated chain carbonates, and fluorinated chain carboxylic acid esters such as methyl fluoropropionate (FMP).

Examples of the aforementioned esters include cyclic carbonate esters such as ethylene carbonate (EC), propylene carbonate (PC) and butylene carbonate, chain carbonate esters such as dimethyl carbonate (DMC), ethyl methyl carbonate (EMC), diethyl carbonate (DEC), methyl propyl carbonate, ethyl propyl carbonate and methyl isopropyl carbonate, cyclic carboxylic acid esters such as $\gamma$-butyrolactone (GBL) and $\gamma$-valerolactone (GVL), and chain carboxylic acid esters such as methyl acetate, ethyl acetate, propyl acetate, methyl propionate (MP) and ethyl propionate (EP).

Examples of the aforementioned ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, crown ether, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

The electrolyte salt is preferably a lithium salt. Examples of lithium salts include $LiBF_4$, $LiClO_4$, $LiPF_6$, $LiAsF_6$, $LiSbF_6$, $LiMnCl_4$, LiSCN, $LiCF_3SO_3$, $LiCF_3CO_2$, $Li(P(C_2O_4)F_4)$, $LiPF_{6-x}(C_nF_{2n+1})_x$ ($1 < x < 6$, n is 1 or 2), $LiB_{10}Cl_{10}$, LiCl, LiBr, LiI, lithium chloroborane, lithium lower aliphatic carboxylates, borates such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ wherein 1 and m are integers of 0 or more. The lithium salt may be used alone, or a plurality of types may be mixed and used. Among them, $LiPF_6$ is preferably used from the viewpoint of ionic conductivity, electrochemical stability, etc. The concentration of the lithium salt is, for example, 0.8 mol to 1.8 mol per 1 L of the non-aqueous solvent. Moreover, a vinylene carbonate or a propane sultone-based additive may be further added.

EXAMPLES

The present disclosure will be further described below with reference to Examples and Comparative Examples, but the present disclosure is not limited to the following Examples.

[Production of Positive Electrode Active Material]

<Example 1>

A transition metal oxide was mixed with Sr $(OH)_2$ and $Ca(OH)_2$ so that the content of Sr and Ca was 1.0 mol% and 0.1 mol%, respectively relative to the total amount of Ni, Mn, and Co of the transition metal oxide represented by the formula $Ni_{0.82}Mn_{0.03}Co_{0.15}O_2$, and further mixed with lithium hydroxide monohydrate ($LiOH \bullet H_2O$) so that the molar ratio of the total amount of Ni, Mn, Co, Sr, and Ca, to Li was 1: 1.03. After the mixture was calcinated from room temperature to 650°C under an oxygen stream with an oxygen concentration of 95% (flow rate of 5 L/min per 1 kg of the mixture) at a rate of temperature rise of 2°C/min, it was calcinated by raising the temperature from 650°C to 800°C at a rate of temperature rise of 1°C/min. Impurities were removed from this calcinated product by washing with water to obtain the positive electrode active material of Example 1. As a result of analyzing the composition of positive electrode active material of Example 1 by using an ICP-AES, the composition was found to be $Li_{0.99}Ni_{0.82}Mn_{0.03}Co_{0.15}Sr_{0.01}Ca_{0.001}O_2$. Moreover, X-ray diffraction measurement was carried out on the positive electrode active material of Example 1. The proportion of the metal elements excluding Li present in the Li layer relative to the total molar amount of the metal elements excluding Li in the lithium transition metal composite oxide was 0.87 mol%. The m/n ratio of the half width m of the diffraction peak in a (003) plane to the half width n of the diffraction peak in a (104) plane was 0.978 in the X-ray diffraction pattern by the X-ray diffraction.

[Fabrication of Positive Electrode]

95 parts by mass of the positive electrode active material described above, 3 parts by mass of acetylene black as the conductive agent, and 2 parts by mass of polyvinylidene fluoride as the binder were mixed, and the mixture was further mixed with N-methyl-2-pyrrolidone (NMP) to prepare a positive electrode slurry. Next, the positive electrode current collector made of aluminum foil having a thickness of 15 $\mu$m was coated with the slurry, and the coating film was

dried, then rolled by a rolling roller, and cut into a predetermined electrode size to obtain a positive electrode in which a positive electrode mixture layer was formed on both sides of the positive electrode core. It is noted that an exposed portion of the positive electrode core with the surface exposed was arranged on a portion of the positive electrode.

[Preparation of Non-Aqueous Electrolyte]

**[0057]** Ethylene carbonate (EC), methyl ethyl carbonate (MEC), and dimethyl carbonate (DMC) were mixed in a volume ratio of 3 :3 :4. A non-aqueous electrolyte was prepared by dissolving lithium hexafluorophosphate ($LiPF_6$) in the mixed solvent at a concentration of 1.2 mol/liter.

[Fabrication of Test Cell]

**[0058]** An aluminum lead was attached to the exposed portion of the positive electrode, and a nickel lead was attached to a lithium metal foil as the negative electrode, respectively, and the positive electrode and the negative electrode were swirlingly wound with a polyolefin separator interposed therebetween and press-formed in the radial direction to fabricate a flat wound electrode assembly. This electrode assembly was housed in an outer body constructed of a aluminum laminate sheet, the aforementioned non-aqueous electrolytic solution was injected, and then an opening of the outer body was sealed to obtain a test cell.

[Evaluation of Capacity Retention]

**[0059]** For the above test cells, the cycle tests described below were carried out. The discharge capacity of the first cycle of the cycle test and the discharge capacity of the 30th cycle were obtained to calculate the capacity retention by the following formula.

$$\text{Capacity retention (\%)} = (\text{30th cycle discharge capacity} \div \text{1st cycle discharge capacity}) \times 100$$

<Cycle Test>

**[0060]** The test cell was charged at a constant current of 0.2 It under a temperature environment of 25°C until the battery voltage reached 4.3 V, and then charged at a constant voltage of 4.3 V until the current value reached 1/100 It. Subsequently, constant current discharge was carried out with a constant current of 0.2 It until the battery voltage fell down to 2.5 V. This charge/discharge cycle was repeated 30 cycles.

<Examples 2 and 4>

**[0061]** Test cells were each fabricated and evaluated in the same manner as in Example 1 except that a positive electrode active material was synthesized by changing the raw materials used, the compounding ratio of raw materials, the molar ratio of the total amount of metal elements excluding Li to Li to 1 :1.05, and the calcination temperature of the second stage to 750°C.

<Example 3>

**[0062]** A test cell was fabricated and evaluated in the same manner as in Example 4 except that a positive electrode active material was synthesized by changing the compounding ratio of raw materials and the oxygen concentration to an oxygen concentration of 95% under an oxygen stream (flow rate of 10 L/min per 1 kg of the mixture).

<Example 5>

**[0063]** A test cell was fabricated and evaluated in the same manner as in Example 2 except that a positive electrode active material was synthesized by changing the raw materials used, the compounding ratio of the raw materials, and by carrying out calcination from room temperature to 650°C at a rate of temperature rise of 5°C/min followed by calcination by raising the temperature from 650°C to 750°C at a rate of temperature rise of 3°C/min.

<Examples 6 to 8>

Test cells were each fabricated and evaluated in the same manner as in Example 1 except that a positive electrode active material was synthesized by changing the raw materials used, the compounding ratio of the raw materials, and the calcination temperature of the second stage to 730°C.

<Comparative Example 1>

A test cell was fabricated and evaluated in the same manner as in Example 1 except that a positive electrode active material was synthesized by changing the compounding ratio of the raw materials.

<Comparative Example 2>

A test cell was fabricated and evaluated in the same manner as in Example 2 except that a positive electrode active material was synthesized by changing the raw materials used and the compounding ratio of the raw materials.

<Comparative Example 3>

A test cell was fabricated and evaluated in the same manner as in Example 2 except that a positive electrode active material was synthesized by changing the compounding ratio of raw materials, the molar ratio of the total amount of metal elements excluding Li to Li to 1 :0.95, and the calcination temperature of the second stage to 850°C.

<Comparative Example 4>

A test cell was fabricated and evaluated in the same manner as in Example 2 except that a positive electrode active material was synthesized by changing the raw materials used, the compounding ratio of raw materials, and the oxygen concentration to an oxygen concentration of 95% under an oxygen stream (flow rate of 0.1 L/min per 1 kg of the mixture).

<Comparative Example 5>

A test cell was fabricated and evaluated in the same manner as in Example 6 except that a positive electrode active material was synthesized by changing the raw materials used and the compounding ratio of raw materials.

<Comparative Example 6>

A test cell was fabricated and evaluated in the same manner as in Example 1 except that a positive electrode active material was synthesized by changing the raw materials used, the compounding ratio of raw materials, and the calcination temperature of the second stage to 730°C.

<Comparative Example 7>

A test cell was fabricated and evaluated in the same manner as in Example 7 except that a positive electrode active material was synthesized by changing the compounding ratio of raw materials and the molar ratio of the total amount of metal elements excluding Li to Li to 1 :1.1.

The capacity retention of Examples and Comparative Examples is shown in Tables 1 to 3. The evaluation results of the capacity retention shown in Tables 1 to 3 are relatively denoted, assuming each of the capacity retention of the test cells of Comparative Examples 1, 2, and 5 being 100%. Moreover, Tables 1 to 3 also show the m/n ratio of the half width m of the diffraction peak in a (003) plane to the half width n of the diffraction peak in a (104) plane in the X-ray diffraction pattern by the X-ray diffraction, and the proportion of metal elements excluding Li present in the Li layer with respect to the total number of moles of metal elements excluding Li.

[Table 1]

| | Positive electrode active material | | | | | | Battery performance evaluation |
|---|---|---|---|---|---|---|---|
| | Ni (mol%) | Mn (mol%) | M (mol%) | Sr/Ca (mol%) | m/n | Metal elements excluding Li in the Li layer (mol%) | Capacity retention (%) |
| Example 1 | 82 | 3 | Co 15 | Sr 1.0 Ca 0.1 | 0.978 | 0.87 | 101.2 |
| Comparative Example 1 | 82 | 3 | Co 15 | - | 0.967 | 0.90 | 100 |

[Table 2]

| | Positive electrode active material | | | | | | Battery performance evaluation |
|---|---|---|---|---|---|---|---|
| | Ni (mol%) | Mn (mol%) | M (mol%) | Sr/Ca (mol%) | m/n | Metal elements excluding Li in the Li layer (mol%) | Capacity retention |
| Example 2 | 85 | 5 | Co 10 | Sr 0. 05 | 0.864 | 2.60 | 103.0 |
| Example 3 | 85 | 5 | Co 10 | Ca 0. 1 | 0.966 | 2.50 | 102.5 |
| Example 4 | 85 | 5 | Co 10 | Ca 0.5 | 0.942 | 2.60 | 105.2 |
| Example 5 | 85 | 5 | Co 10 | Sr 0. 1 Ca 0.5 | 0.780 | 2.60 | 104.7 |
| Comparative Example 2 | 85 | 5 | Co 10 | - | 0.809 | 2.65 | 100 |
| Comparative Example 3 | 85 | 5 | Co 10 | Sr 0.5 | 0.996 | 3.27 | 98.4 |
| Comparative Example 4 | 85 | 5 | Co 10 | Ca 2.0 | 0.63 | 2.40 | 99. 2 |

[Table 3]

| | Positive electrode active material | | | | | | Battery performance evaluation |
|---|---|---|---|---|---|---|---|
| | Ni (mol%) | Mn (mol%) | M (mol%) | Sr/Ca (mol%) | m/n | Metal elements excluding Li in the Li layer (mol%) | Capacity retention |
| Example 6 | 92 | 3 | A1 5 | Sr 0. 1 | 0.767 | 0.80 | 102.9 |
| Example 7 | 92 | 3 | A1 4.5 Nb 0.5 | Sr 0. 1 | 0. 802 | 1.40 | 101.8 |
| Example 8 | 92 | 3 | A1 4.5 Si 0. 5 | Ca 0. 8 | 0. 861 | 1. 24 | 106.7 |
| Comparative Example 5 | 92 | 3 | A1 5 | - | 0. 830 | 1. 90 | 100 |

(continued)

| | Positive electrode active material | | | | | | Battery performance evaluation |
|---|---|---|---|---|---|---|---|
| | Ni (mol%) | Mn (mol%) | M (mol%) | Sr/Ca (mol%) | m/n | Metal elements excluding Li in the Li layer (mol%) | Capacity retention |
| Comparative Example 6 | 90 | | Co 5 A1 5 | Sr 1.0 | 0.821 | 0.90 | 99. 8 |
| Comparative Example 7 | 92 | 3 | A1 4.5 Nb 0. 5 | Sr 0. 1 | 0.791 | 0.50 | 96. 1 |

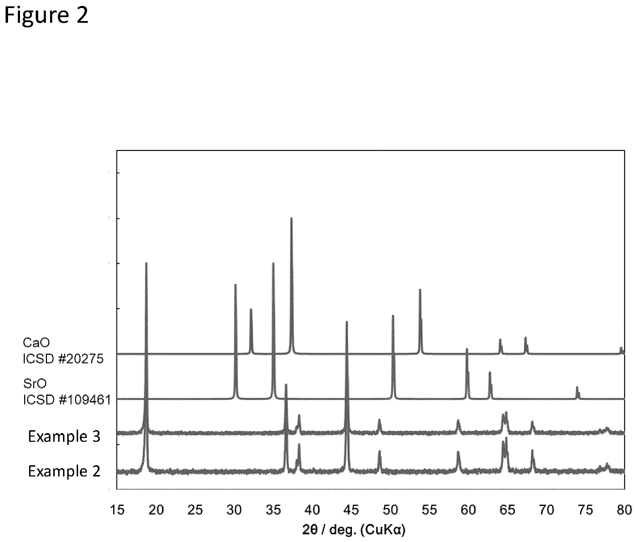

As shown in Tables 1 to 3, Examples 1 to 8 exhibited higher capacity retention than Comparative Examples 1 to 7. No peaks derived from SrO and CaO were present in the X-ray diffraction pattern of any of Examples. The X-ray diffractograms of Examples 2 and 3 and those of SrO and CaO were exemplified in FIG. 2.

REFERENCE SIGNS LIST

10 non-aqueous electrolyte secondary battery
11 positive electrode
12 negative electrode
13 separator
14 electrode assembly
15 battery case
16 outer can
17 sealing assembly
18, 19 insulating plates
20 positive electrode tab
21 negative electrode tab
22 grooved portion
23 bottom plate
24 lower vent member
25 insulating member
26 upper vent member
27 cap
28 gasket
30 positive electrode current collector
31 positive electrode mixture layer
40 negative electrode current collector
41 negative electrode mixture layer

**Claims**

1. A positive electrode active material for non-aqueous electrolyte secondary batteries, comprising:

a lithium transition metal composite oxide having a layered structure, represented by a formula $Li_aNi_xMn_yM_zO_{2-b}$ wherein $0.95 <a <1.05$, $0.7 \leq x \leq 0.95$, $0 <y \leq 0.3$, $0 \leq z \leq 0.3$, $0 \leq b <0.05$, $x + y + z = 1$, and M is at least one element selected from the group consisting of Al, Co, Fe, Ti, Si, Nb, Mo, W, and Zn, and
a compound A including at least one of Ca and Sr present on a surface or at a boundary of primary particles of the lithium transition metal composite oxide, wherein
the layered structure includes a Li layer in which Li reversibly moves in and out, and a proportion of metal elements excluding Li present in the Li layer is 0.7 mol% or more and 3.0 mol% or less relative to a total molar amount of the metal elements excluding Li in the lithium transition metal composite oxide, and wherein a m/n ratio of a half width m of a diffraction peak in a (003) plane to a half width n of a diffraction peak in a (104) plane is 0.75 ≤m/n ≤1.0 in an X-ray diffraction pattern by X-ray diffraction.

2. The positive electrode active material for non-aqueous electrolyte secondary batteries according to claim 1, wherein a total amount of Ca and Sr in the compound A is 1 mol% or less relative to a total molar amount of metal elements excluding Li in the lithium transition metal composite oxide.

3. The positive electrode active material for non-aqueous electrolyte secondary batteries according to claim 1 or 2, wherein a crystallite size s is in a range of 400 Å ≤s ≤800 Å, as calculated by a Scherrer's formula from a half width n of a diffraction peak in a (104) plane in an X-ray diffraction pattern by X-ray diffraction.

4. The positive electrode active material for non-aqueous electrolyte secondary batteries according to any one of claims 1 to 3, wherein no peaks derived from CaO and SrO are present in an X-ray diffraction pattern by X-ray diffraction measurement.

5. A method for producing the positive electrode active material for non-aqueous electrolyte secondary batteries according to any one of claims 1 to 4, including
a step of calcinating a mixture obtained by dry-mixing a transition metal oxide, a Li compound and at least one of a Ca compound and a Sr compound at 850°C or lower.

6. A non-aqueous electrolyte secondary battery, comprising:

a positive electrode including the positive electrode active material for non-aqueous electrolyte secondary batteries according to any one of claims 1 to 4;
a negative electrode; and
a non-aqueous electrolyte.

# Figure 1

# Figure 2

## INTERNATIONAL SEARCH REPORT

International application No.

PCT/JP2020/035249

**A. CLASSIFICATION OF SUBJECT MATTER**
Int. Cl. C01G53/00(2006.01)i, H01M4/505(2010.01)i, H01M4/525(2010.01)i
FI: H01M4/525, H01M4/505, C01G53/00 A
According to International Patent Classification (IPC) or to both national classification and IPC

**B. FIELDS SEARCHED**

Minimum documentation searched (classification system followed by classification symbols)
Int. Cl. C01G53/00, H01M4/505, H01M4/525

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-530122 A (SION POWER CORPORATION) 11 October 2018, paragraphs [0071]-[0073] | 1-6 |
| A | JP 2013-30284 A (MITSUBISHI CHEMICAL CORP.) 07 February 2013, paragraphs [0023]-[0027] | 1-6 |
| A | JP 5682796 B2 (TOYOTA MOTOR CORP.) 11 March 2015, paragraphs [0008], [0023]-[0025] | 1-6 |
| A | JP 5615926 B2 (HITACHI MAXELL, LTD.) 29 October 2014, paragraphs [0054], [0055], [0072] | 1-6 |
| A | JP 2016-110889 A (SAMSUNG SDI CO., LTD.) 20 June 2016, paragraphs [0028], [0044]-[0046] | 1-6 |

☐ Further documents are listed in the continuation of Box C.　☒ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| 18.11.2020 | 01.12.2020 |

| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

**INTERNATIONAL SEARCH REPORT**

Information on patent family members

| International application No. |
|---|
| PCT/JP2020/035249 |

| Patent Documents referred to in the Report | Publication Date | Patent Family | Publication Date |
|---|---|---|---|
| JP 2018-530122 A | 11.10.2018 | US 2018/0254516 A1<br>paragraphs [0114]-<br>[0116]<br>WO 2017/055282 A1<br>EP 3357115 A1<br>KR 10-2018-0061322 A<br>CN 108352515 A | |
| JP 2013-30284 A | 07.02.2013 | (Family: none) | |
| JP 5682796 B2 | 11.03.2015 | (Family: none) | |
| JP 5615926 B2 | 29.10.2014 | US 2013/0136988 A1<br>paragraphs [0056],<br>[0057], [0074]<br>WO 2012/018035 A1<br>CN 102893430 A<br>KR 10-2013-0096637 A<br>KR 10-2018-0088519 A | |
| JP 2016-110889 A | 20.06.2016 | US 2016/0164094 A1<br>paragraphs [0047],<br>[0068], [0069]<br>EP 3032618 A2<br>CN 105702952 A<br>KR 10-2016-0069992 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003100295 A

- JP 2018129221 A